# EUROPÄISCHE PATENTANMELDUNG

(11) **EP 0 939 097 A1**
(43) Veröffentlichungstag der Anmeldung: **01.09.1999**
(21) Anmeldenummer: 99102934.9
(22) Anmeldetag: 13.02.1999
(51) Int. Cl.: C08G 77/46, C08J 9/00, C08G 18/50

(54) **Verwendung von Siliconpolyether-Copolymeren bei der Herstellung von Polyurethan-Kaltschäumen**

(30) Priorität: 28.02.1998 DE 19808581
(71) Anmelder: Th. Goldschmidt AG, 45127 Essen (DE)
(72) Erfinder: Burkhart, Georg, Dr., 45239 Essen (DE); Klietsch, Bernd-Jürgen, 45145 Essen (DE); Langenhagen, Rolf-Dieter, 45529 Hattingen (DE); Weier, Andreas, Dr., 45289 Essen (DE)

(57) **Zusammenfassung**

Die Erfindung betrifft die Verwendung von Siliconpolyether-Copolymeren der allgemeinen Formel I 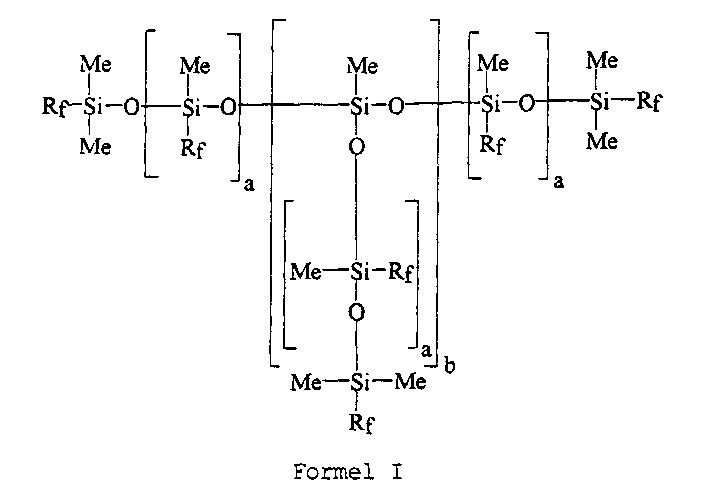 als oberflächenaktive Substanzen bei der Herstellung von Polyurethan-Kaltschäumen.

## Beschreibung

Die nach dem Stand der Technik bei der Herstellung von Polyurethanschäumen angewandten Prozesse werden nach einer Reihe von Typen unterschieden. Diese Unterscheidungen können sowohl die verwendeten Chemikalien als auch die verwendeten Produktionsmaschinen betreffen. So wird z. B. zwischen einer diskontinuierlichen Fertigung in Kisten oder Formen und einer kontinuierlichen Fertigung auf verschiedenen Typen von Verschäumungsmaschinen unterschieden. Auch bezogen auf die verwendeten Rohstoffe und damit hergestellten Schaumtypen sind deutlich verschiedene Gruppen von Polyurethanschäumen zu unterscheiden.

So sind z. B. Hartschäume schon von ihrem Eigenschaftsprofil und ihrer Verwendung deutlich verschieden von Weichschäumen, aber selbst innerhalb der Gruppe der Weichschäume wird zwischen Heißschaum und Kaltschaum unterschieden. Hierbei bezeichnet man als Kaltschaum einen sogenannten hochelastischen Polyurethanschaum, der durch Reaktion von mindestens einem difunktionellen Polyisocyanat, z. B. Toluol-Diisocyanat oder Diphenylmethandiisocyanat, mit mindestens einem Polyol entsteht, welches mindestens zwei Hydroxylgruppen je Molekül aufweist und im Mittel einen hohen Anteil an primären Hydroxylgruppe hat. Bedingt durch den hohen Gehalt an primären OH-Gruppen weisen die Polyole in bezug auf die Isocyanate eine hohe Reaktivität auf.

Im Gegensatz zu konventionellen Polyurethanschäumen, den sogenannten Heißschäumen, wird deshalb bereits beim Aufschäumen eine hohe Vernetzungsdichte erzielt. Dies hat den Vorteil, daß beim Aushärten auf die Zufuhr von größeren Mengen Energie meist verzichtet werden kann und daß die Zeit für die Aushärtung der Schäume insgesamt verkürzt wird. Nachteilig ist aber, daß die Tendenz zur Bildung geschlossenzelliger Schäume erhöht und damit auch der Verarbeitungsspielraum eingeengt wird. Unter Verarbeitungsspielraum sind dabei die Toleranzgrenzen zu verstehen, innerhalb derer von einer Rezeptur abgewichen werden kann, ohne daß die Ausbildung stabiler und gleichzeitig ausreichend offenzelliger bzw. leicht aufdrückbarer Schäume gefährdet wird. Diese höhere Reaktivität der Verschäumungskomponente und das dadurch im Vergleich zum Heißweichschaum bedingte engere Verarbeitungsspiel gestatten es nach dem Stand der Technik nicht, als Schaumstabilisatoren Produkte zu verwenden, die in bezug auf ihren Aufbau oder ihre Molekulargewichte den Schaumstabilisatoren entsprechen, die bei der Herstellung von sogenannten Heißschäumen mit Erfolg eingesetzt werden.

Dieser Stand der Technik spiegelt sich in einer Vielzahl von unterschiedlichen Patenten auf dem Polyurethangebiet wider. So ist z. B. in der GB-A-907 971 schon im Jahre 1960 beschrieben worden, daß hochmolekulare Silikonöle eine übermäßig große Zahl geschlossener Zellen im Schaum hervorrufen. Daher werden in der angegebenen Patentschrift niedermolekulare Polydialkylsiloxane mit Viskositäten von 2 bis 9 Centistokes bei 25 °C vorgeschlagen. Diese garantieren dann nach dem Stand der Technik ein verbessertes Verarbeitungsspiel (siehe Spalte 2, Zeilen 55 ff.). Generell sind im Bereich der kalthärtenden Polyurethanschaumstoffe eine Vielzahl von niedermolekularen Polydimethylsiloxanen oder mit wenig polaren Gruppen modifizierte kurze Polydimethylsiloxane vorgeschlagen worden und werden nach dem heutigen Stand der Technik auch eingesetzt.

So werden z. B. in der DE-A-36 26 297 Siloxane mit Chlorpropylresten als Kaltschaumstabilisator beschrieben. Auch in diesem Fall handelt es sich um relativ niedermolekulare Siloxane, die mit Gruppen relativ geringer Polarität substituiert sind. Auch in EP-A-0 041 216 werden Siloxane mit durchweg kurzer Kettenlänge eingesetzt, die zudem noch mit wenig polaren und niedermolekularen Substituenten, in diesem Fall Alkoxygruppen mit 1 bis 7 C-Atomen, substituiert sind. Selbst in den Fällen, in denen bisher konventionelle Silikonpolyether höheren Molekulargewichtes im Kaltschaum eingesetzt wurden, wie z. B. in EP-A-0 043 110, wurden diese Substanzen grundsätzlich im Unterschuß in Mischung mit typischen Kaltschaumstabilisatoren verwendet. In EP-A-0 043 110 z. B. besteht der überwiegende Teil, mindestens 65 %, der verwendeten Stabilisatorzubereitung aus typischen Kaltschaumstrukturen mit sehr kurzen Siloxanen, Kettenlänge ≤ 10, mit Cyanoalkyl- oder endverkappten Polyethyloxideinheiten geringen Molekulargewichtes.

Auch in US-A-4 477 601 wird eindeutig beschrieben, daß der Hauptanteil eines Kaltschaumstabilisators typischerweise aus niedermolekularen Siloxanen mit relativ geringen Anteilen an polaren Substituenten bestehen darf. So sind nach angegebenem Patent mindestens 78 % Stabilisatoren mit einer typischen Kaltschaumstruktur notwendig. Höhere Anteile als 22 % eines Stabilisators für konventionelle Urethanweichschäume, in diesem Text als Heißweichschäume bezeichnet, bewirken danach ein sehr geringes Verarbeitungsspiel mit einer Neigung zu geschlossenzelligen, teilweise schrumpfenden Schäumen.

US-A-4 119 582 beschreibt einen Prozeß zur Herstellung von Kaltschäumen unter Verwendung eines Schaumstabilisators aus einer Mischung eines "hoch"molekularen Siloxanoxyalkylencopolymers in Mischung mit einem "niedrig"molekularen Siloxanoxyalkylencopolymer. Während das "hoch"molekulare Siloxanoxyalkylencopolymer mindestens fünf Oxyalkyleneinheiten in jedem Oxyalkylenblock enthält und in der Mischung in einer Menge von 84 bis 99,9 Gew.-% enthalten ist, enthält das "niedrig"molekulare Siloxanoxyalkylencopolymer bis zu vier Oxyalkyleneinheiten in jedem Oxyalkylenblock und ist in der Mischung in einer Menge von 0,2 bis 16 Gew.-% enthalten. Das "hoch"molekulare Siloxanoxyalkylencopolymer hat eine molekulare Masse im Bereich von 1000 bis 16 000, während das "niedrig"molekulare Siloxanoxyalkylencopolymer einen Molekularbereich von 500 bis 10 000 abdeckt. Demzufolge sind also die beiden Klassen von Copolymeren nicht notwendigerweise durch ihre Molekulargewichte zu unterscheiden, sondern mehr durch die Zahl der Oxyalkyleneinheiten in ihren Oxyalkylenblöcken.

Trotzdem handelt es sich selbst bei dem "hoch"molekularen Siloxanoxyalkylencopolymer um ein im Vergleich zu üblichen Weichblockschaumstabilisatoren (wie z. B. in US-A-5 357 018 oder US-A-5 306 737 beschrieben) kleines Molekül.

Überraschenderweise wurde nun gefunden, daß auch durch Verknüpfung von einem oder mehreren Polyethern teilweise erstaunlich hohen Molekulargewichtes mit Siloxanen auch deutlich höherer Kettenlänge, als normalerweise für Kaltschaumstabilisatoren nach dem Stand der Technik üblich, vorteilhafte Stabilisatoren bzw. Zellregulatoren für die Herstellung von Kaltschäumen erhältlich sind.

Gegenstand vorliegender Erfindung ist deshalb die Verwendung von Siliconpolyether-Copolymeren der allgemeinen Formel I als oberflächenaktive Substanzen bei der Herstellung von Polyurethan-Kaltschäumen (High Resilience- (HR-) Schäumen) 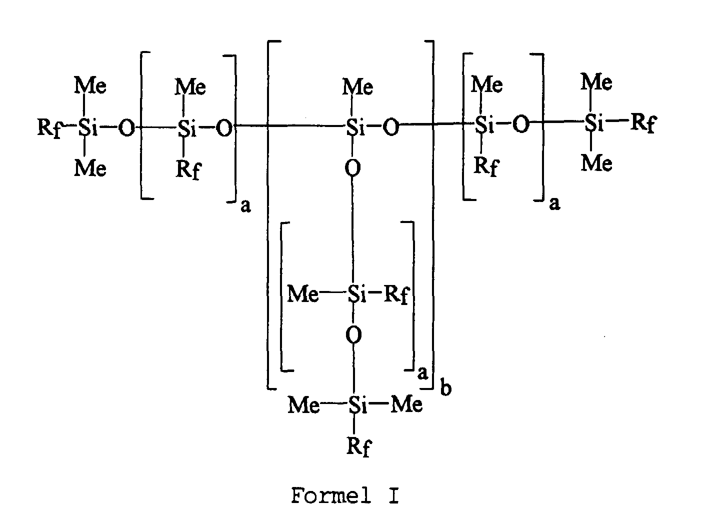 wobei
R_{f} entweder gleich R¹ oder der Rest R² ist, wobei
   R¹ Alkylreste mit 1 bis 6 Kohlenstoffatomen oder gegebenenfalls substituierte Arylreste sind, jedoch mindestens 30 % der Reste R¹ Methylreste sind und
   R² gleiche oder verschiedene Polyetherreste der durchschnittlichen Formel

      -(Y)_{c}[O(CₓH₂ₓO)ₚZ]_{w}

      bezeichnet, mit der Bedeutung
      c = 0 oder 1,
      x = 2 bis 4,
      p ≥ 1,
      w = 1 bis 4,
      Z = ein Wasserstoffrest oder ein einwertiger organischer Rest,
      Y = ein (w+1)-bindiger Kohlenwasserstoffrest, der auch verzweigt sein kann,

      wobei das Verhältnis Anzahl R¹ + Anzahl R²/Anzahl R² ≤ 20 ist,
      mit der Maßgabe, daß mindestens ein Rest R² eine Masse von mehr als 1200, bevorzugt mehr als 2000, hat,
      und wobei
      b eine Zahl von 0 bis 8 ist,
      a eine Zahl von 2 bis 100 ist, wenn b eine Zähl von 6 bis 8 ist;
      a eine Zahl von 3 bis 100 ist, wenn b eine Zahl von 3 bis 6 ist;
      a eine Zahl von 9 bis 200 ist, wenn b eine Zahl von 0 bis 3 ist,
         und der weiteren Maßgabe, daß die durchschnittliche Zahl der Siliciumatome pro Molekül größer als 20, bevorzugt größer als 35 ist und die durchschnittliche molare Masse der Siliconpolyether-Copolymeren mehr als 16 000 beträgt.

Das Siloxangerüst kann geradkettig (b = 0) oder aber verzweigt sein (b > 0 bis 8). Der Wert von a kann erfahrungsgemäß nur in der angegebenen Weise mit Werten von b kombiniert werden, da ansonsten die erhöhte Viskosität der Polymermoleküle zur Vergelung führt und eine Handhabung unmöglich macht. Die erfindungsgemäßen Verbindungen sind daher bei Raumtemperatur gießbar. Der Wert von b wie auch der Wert von a sind, wie dem Fachmann geläufig ist, als durchschnittliche Werte im Polymermolekül zu verstehen, da die erfindungsgemäß zu verwendenden Siliconpolyether-Copolymeren in Form von - im Regelfall - äquilibrierten Gemischen vorliegen.

Die Reste R¹ sind ggf. verzweigte, ggf. halogen- bzw. pseudohalogensubstituierte Alkylreste mit 1 bis 6 Kohlenstoffatomen, wie Methyl-, Ethyl-, Propyl-, Chlorpropyl-, Butylreste oder Arylreste, wobei für die letztgenannten Phenylreste bevorzugt sind. Herstellungs- und preisbedingt sind Methylreste bevorzugt, so daß mindestens 30 % der Reste R¹ Methylreste sein sollen. Besonders bevorzugt sind solche Siliconpolyether-Copolymeren, bei denen alle Reste R¹ Methylreste sind.

Z ist Wasserstoff oder ein einwertiger organischer Rest, insbesondere der Rest C₁- bis C₄-alkyl oder CO-(C₁ bis C₆) oder ein Urethanrest.

Es können sowohl ein als auch mehrere Siliconpolyether-Copolymeren in Kombination miteinander verwendet werden, dabei sind die erfindungsgemäßen Produkte mit mehr als 35 %, bevorzugt mit mehr als 50 %, besonders bevorzugt mit mehr als 90 % Anteil der silikonhaltigen Substanzen des gesamten Kaltschaumstabilisators vorhanden. Dabei werden die den mit diesem Fachgebiet vertrauten Personen hinlänglich bekannten, bei der Herstellung der Siloxanketten durch Äquilibrierung aufgrund der thermodynamischen Gegebenheiten immer in geringen Mengen entstehenden kurzkettigen Siloxane bzw. Siloxanringe nicht gesondert berücksichtigt. Die erfindungsgemäß verwendeten Stabilisatoren können durch Kombination von Siloxanen mit Kettenlängen oberhalb von 20, bevorzugt oberhalb von 35, und einem oder mehreren Polyethern erhalten werden, wobei mindestens ein Polyether, bevorzugt alle verwendeten Polyether, ein Molekulargewicht von mehr als 1200, bevorzugt mehr als 2000, hat bzw. haben.

Die Polyether können Ethylenoxid, Propylenoxid und bis zu 20 % Butylenoxid oder höhere Alkylenoxide enthalten und als Endgruppen sowohl Hydroxylgruppen als auch C₁- bis C₆-Alkylether- oder Estergruppen enthalten. Hergestellt werden die Verbindungen, wie in der Literatur für Siliconpolyether-Copolymere beschrieben, z. B. durch Hydrosilylierung eines doppelbindungshaltigen Polyethers, gegebenenfalls im Gemisch mit anderen doppelbindungshaltigen Polyethern (siehe z. B. US-A-5 357 018 oder US-A-5 306 737).

Kombinationen verschiedener Gruppen R² im gleichen Polysiloxan sind dabei besonders bevorzugt.

Bei der Verwendung zur Herstellung von Polyurethan-Kaltschäumen (sogenannten High Resilience-Schäumen) in Formen haben diese erfindungsgemäßen Verbindungen die Eigenschaft, die Formschäume ausreichend zu stabilisieren und die Zellstruktur bis in die Randbereiche zu regulieren. Die erhaltenen Schaumkissen sind vergleichsweise leicht aufdrückbar.

Zur Austestung der erfindungsgemäß verwendeten Substanzen werden die Verbindungen in den angegebenen Konzentrationen in der bekannten Weise in üblichen Formulierungen verschäumt, die z. B. zur Herstellung von Autositzen oder Möbelkissen verwendet werden.

Für die anwendungstechnischen Prüfungen werden folgende Formulierungen verwendet:

| | Formulierung 1 | Formulierung 2 | Formulierung 3 |
|---|---|---|---|
| Polyol 1 | 100 Teile | 50 Teile | 100 Teile |
| Polyol 2 | | 50 Teile | |
| Wasser | 3,0 Teile | 4,0 Teile | 3,0 Teile |
| Diethanolamin | 2,0 Teile | 1,2 Teile | |
| Triethanolamin | | | 1,2 Teile |
| Tegoamin 33⁽¹⁾ | 0,4 Teile | 0,4 Teile | 0,6 Teile |
| Tegoamin BDE⁽²⁾ | 0,05 Teile | 0,05 Teile | |
| Dimethylethanolamin | | | 0,2 Teile |
| T 80 ⁽³⁾ | 37,8 Teile | 51,1 Teile | |
| Isocyanatgemisch aus 40 % rohem MDI und 60 % T 80 | | | 46,2 Teile |
| Stabilisator | variabel | variabel | variabel |

| | | | |
|---|---|---|---|
| Polyol 1 handelsübliches Polyetherpolyol MW 4800, OHZ = 36 | | | |
| Polyol 2 handelsübliches Copolymer-Polyol, enthält 40 % Styrol-Acrylnitril-Copolymer, OHZ = 17 | | | |
| ⁽¹⁾ Tegoamin 33 handelsüblicher Aminkatalysator der Th. Goldschmidt AG | | | |
| ⁽²⁾ Tegoamin BDE handelsüblicher Aminkatalysator der Th. Goldschmidt AG | | | |
| ⁽³⁾ T 80 handelsübliches Toluylendiisocyanat | | | |

### Verwendete Stabilisatoren:

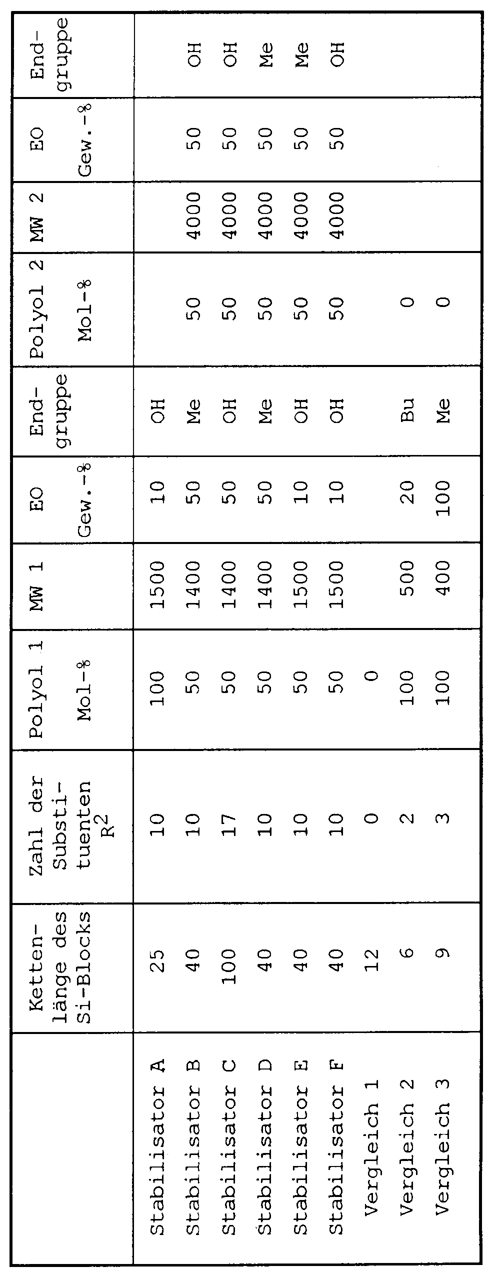

### Durchführung der Versuche:

Die in Formulierung 1 genannten Komponenten mit Ausnahme des T 80, jedoch inklusive der zu überprüfenden Stabilisatoren, werden in einem 2-Liter-Becher mit einem Flügelrührer 1 Minute bei 1000 UpM gemischt. Nach Zusetzen des T 80 wird für weitere 7 Sekunden bei 2500 UpM gemischt. Die Reaktionsmischung wird in der für eine vollständige Ausschäumung der Form notwendigen Menge in eine beheizte Aluminiumform (40x40x10cm) gegeben. Nach exakt 6 Minuten wird entformt und die Aufdrückkraft gemäß Beschreibung gemessen.

Die Beurteilung der mit den erfindungsgemäßen Substanzen hergestellten Schäume geschieht dabei nach folgenden Kriterien:
1) Zellstruktur: Der typische Kaltschaum besitzt eine unregelmäßige Zellstruktur, aus der heraus er unter anderem seine guten Elastizitätseigenschaften bezieht. Es wird daher grundsätzlich die unregelmäßige Zellstruktur erwartet.
2) Randzonenregulierung: Das Schaumkissen soll vom Kern bis zur Haut eine durchgehend gute Zellstruktur aufweisen. Eine deutlich vergröberte Randzone wird als Fehler angesehen und ist zu vermeiden.
   Die Bewertung reicht von gut über leicht gestört, stark gestört bis wirkungslos.
3) Aufdrückbarkeit: Die Aufdrückbarkeit des Kissens ist ein Maß für die gute Entformbarkeit. Schaumkissen, die nur durch Anwendung einer großen Kraft aufgedrückt werden können, neigen bei der Entformung dazu, eingerissen und zerstört zu werden.

Zur Bestimmung der zum Aufdrücken benötigten Kraft wird an den frisch entformten Schäumen, ohne daß sie zunächst gedrückt werden, mittels einer Druckprüfmaschine die Eindruckhärte (ILD) bei einer Stauchtiefe von 50 % gemessen. Das Kissen wird anschließend durch geeignete Maßnahmen vollständig aufgedrückt. Bei der nun nachfolgenden erneuten Messung wird die eigentliche Materialhärte des frischen Schaums gemessen. Die Differenz der Meßwerte für die erste und die zweite Messung gilt als die zum Aufdrücken des Schaums aufzuwendende Kraft.

| Formulierung 1 | | | | | |
|---|---|---|---|---|---|
| | Konzentration/Teile | Zellstruktur | Zahl der Zellen/cm | Aussehen der Randzonen | Aufdrückkraft (N) |
| Stabilisator A | 1,0 | unregelmäßig | 10 | gut | 1600 |
| Stabilisator C | 0,1 | unregelmäßig | 9 | gut | 1350 |
| Stabilisator D | 0,5 | unregelmäßig | 13 | gut | 1638 |
| Stabilisator F | 0,5 | unregelmäßig | 11 | gut | 1040 |
| Vergleich 1 | 1,0 | unregelmäßig | 13 | gut | 1666 |
| Vergleich 2 | 0,1 | unregelmäßig | 12,5 | gut | 1725 |
| Vergleich 2 | 1,0 | unregelmäßig | 14 | gut | > 3000 |
| Vergleich 3 | 0,1 | unregelmäßig | 9,5 | stark gestört | 1000 |
| Vergleich 3 | 1,0 | unregelmäßig | 12 | gut | 1841 |

Wie die Tabelle mit den Ergebnissen für Formulierung 1 zeigt, wird in allen Fällen ein Schaumkissen erhalten, welches eine für den Kaltschaum gewünschte unregelmäßige Zellstruktur aufweist. Die erfindungsgemäßen Substanzen erlauben eine fehlerfreie Durchregulierung der empfindlichen Randzonen. Überraschenderweise ist bei den erfindungsgemäßen Stabilisatoren die zum Aufdrücken des Schaums benötigte Kraft teilweise als ausgesprochen niedrig anzusehen (z. B. in bezug auf die nicht erfindungsgemäße Vergleichssubstanz 2). Hohe Aufdrückkräfte von > 2500 N ziehen bei der industriellen Produktion Probleme bei der Entformung nach sich und sind insofern unerwünscht.

Weitere Verschäumungsergebnisse in anderen Formulierungen sind in den nachfolgenden Tabellen beschrieben.

| Formulierung 2 | | | | | |
|---|---|---|---|---|---|
| | Konzentration/Teile | Zellstruktur | Zahl der Zellen/cm | Aussehen der Randzonen | Aufdrückkraft (N) |
| Stabilisator A | 1,0 | unregelmäßig | 12 | gut | 1035 |
| Stabilisator C | 0,1 | unregelmäßig | 8,5 | gut | 727 |
| Stabilisator E | 0,5 | unregelmäßig | 12 | gut | 1535 |
| Stabilisator F | 0,1 | unregelmäßig | 11 | gut | 364 |
| Vergleich 1 | 1,0 | Kollaps | | | |
| Vergleich 2 | 1,0 | unregelmäßig | 16 | gut | > 3000 |

Besonders in dieser Formulierung zeigt sich bei den erfindungsgemäßen Substanzen eine interessante Balance zwischen ausreichender Stabilisierung einerseits (s. Vergleich 1) und niedrigen Aufdrückkräften andererseits. Dabei reichen teilweise schon geringe Einsatzkonzentrationen für eine gute Randzonenregulierung aus.

| Formulierung 3 | | | | | |
|---|---|---|---|---|---|
| | Konzentration/Teile | Zellstruktur | Zahl der Zellen/cm | Aussehen der Randzonen | Aufdrückkraft (N) |
| Stabilisator B | 1,0 | unregelmäßig | 10 | gut | 1580 |
| Stabilisator C | 0,1 | unregelmäßig | 9,5 | gut | 1145 |
| Stabilisator D | 1,0 | unregelmäßig | 11 | gut | 2134 |

Auch bei Verwendung von MDI als Isocyanatkomponente in Kaltschaumformulierungen sind die erfindungsgemäßen Produkte offensichtlich vorteilhaft einsetzbar.

## Patentansprüche

1. Verwendung von Siliconpolyether-Copolymeren der allgemeinen Formel I 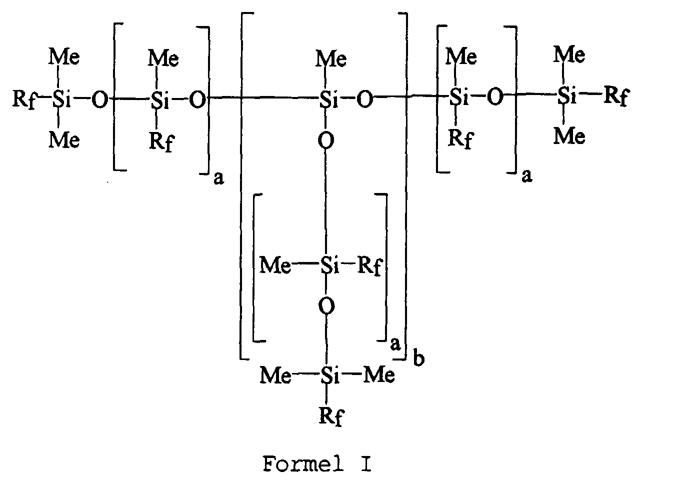 wobei
R_{f} entweder gleich R¹ oder der Rest R² ist, wobei
R¹ Alkylreste mit 1 bis 6 Kohlenstoffatomen oder gegebenenfalls substituierte Arylreste sind, jedoch mindestens 30 % der Reste R¹ Methylreste sind und
R² gleiche oder verschiedene Polyetherreste der durchschnittlichen Formel
-(Y)_{c}[O(CₓH₂ₓO)ₚZ]_{w}
bezeichnet, mit der Bedeutung
c = 0 oder 1,
x = 2 bis 4,
p ≥ 1,
w = 1 bis 4,
Z = ein Wasserstoffrest oder ein einwertiger organischer Rest,
Y = ein (w+1)-bindiger Kohlenwasserstoffrest, der auch verzweigt sein kann,
wobei das Verhältnis Anzahl R¹ + Anzahl R²/Anzahl R² ≤ 20 ist,
mit der Maßgabe, daß mindestens ein Rest R² eine Masse von mehr als 1200, bevorzugt mehr als 2000, hat,
und wobei
b eine Zahl von 0 bis 8 ist,
a eine Zahl von 2 bis 100 ist, wenn b eine Zahl von 6 bis 8 ist;
a eine Zahl von 3 bis 100 ist, wenn b eine Zahl von 3 bis 6 ist;
a eine Zahl von 9 bis 200 ist, wenn b eine Zahl von 0 bis 3 ist,
und der weiteren Maßgabe, daß die durchschnittliche Zahl der Siliciumatome pro Molekül größer als 20, bevorzugt größer als 35 ist und die durchschnittliche molare Masse der Siliconpolyether-Copolymeren mehr als 16 000 beträgt,
als oberflächenaktive Substanzen bei der Herstellung von Polyurethan-Kaltschäumen.
